Europäisches Patentamt

European Patent Office

Office européen des brevets

(11) Veröffentlichungsnummer: **0 210 338**
**A1**

## (12) EUROPÄISCHE PATENTANMELDUNG

(21) Anmeldenummer: 86105072.2

(22) Anmeldetag: 14.04.86

(51) Int. Cl.⁴: **A47J 41/02** , A47G 19/12

(30) Priorität: 26.07.85 DE 3526884

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: Rotpunkt Dr. Anso Zimmermann
Industriestrasse
D-6434 Niederaula / Bad Hersfeld(DE)

(72) Erfinder: Zimmermann, Anso, Dr.
Königsbergerstrasse 11
D-6434 Niederaula(DE)

(74) Vertreter: Körber, Wolfhart, Dr. et al
Patentanwälte Dipl.-Ing. H. Mitscherlich
Dipl.-Ing. K. Gunschmann Dr.rer.nat. W.
Körber Dipl.Ing. J. Schmidt-Evers Dipl.-Ing.
W. Melzer Steinsdorfstrasse 10
D-8000 München 22(DE)

(54) Kanne oder Flasche aus Kunststoff, insbesondere Kunststoffmantel einer Isolierkanne oder -flasche, mit einer Relief-Verzierung auf der Mantelfläche.

(57) Die Erfindung bezieht sich auf eine Kanne oder Flasche aus Kunststoff, insbesondere einen Kunststoffmantel einer Isolierkanne oder -flasche, die bzw. der durch Spritzgießen in einem mehrteiligen Spritzgießwerkzeug mit axial verlaufenden Teilungsfugen hergestellt ist, mit einer Relief-Verzierung auf der Mantelfläche, die im wesentlichen vertikal und wendelförmig verlaufende Erhebungen aufweist, die zwischen sich zurückspringende Mantelflächenstreifen begrenzen. Der Erfindung liegt die Aufgabe zugrunde, die Kanne oder Flasche so auszugestalten, daß ihre Herstellung in einem zweiteiligen Spritzgießwerkzeug möglich ist. Diese Aufgabe wird dadurch gelöst, daß die Mantelflächenstreifen (14) im Bereich der bei einem zweiteiligen Spritzgießwerkzeug vorhandenen nur eine Teilungsfuge mit der axialen Mittelebene (E) der Isolierkanne (1) bzw. der Kunststoffmantels (2) Außenwinkel bilden, die 90° oder geringfügig größer bemessen sind.

FIG.1

## Kanne oder Flasche aus Kunststoff, insbesondere Kunststoffmantel einer Isolierkanne oder -Flasche, mit einer Relief-Verzierung auf der Mantelfläche

Die Erfindung bezieht sich auf eine Kanne oder Flasche nach dem Oberbegriff des Anspruchs 1.

Eine Kanne dieser Bauart wird auf dem Markt vertrieben und ist deshalb bekannt. Es handelt sich um eine Isolierkanne, deren Kunststoffmantel im wesentlichen vertikal und wendelförmig verlaufende Erhebungen aufweist, die zwischen sich zurückspringende Mantelflächenstreifen begrenzen. Bei einer solchen Relief-Verzierung treten beim Einsatz eines Spritzgießwerkzeugs mit nur einer Teilungsfuge (zwei Werkzeughälften) aufgrund des wendelförmigen Verlaufes der Erhebungen Schwierigkeiten bei der Herstellung der Kanne auf. Diese Schwierigkeiten sind dadurch bedingt, daß die Mantelflächenstreifen im Bereich der Teilungsfuge Hinterschneidungen bilden, die das Entformen der Kanne erschweren. Zur Herstellung der bekannten Ausgestaltung ist ein dreiteiliges Spritzgießwerkzeug erforderlich. Ein solches Spritzgießwerzeug hat einen komplizierten Aufbau und ist teuer in der Herstellung. Außerdem hinterlassen die drei Teilungsfugen des Spritzgießwerkzeugs an der Mantelfläche der Kanne drei Nähte, die die Relief-Verzierung und das Aussehen der Kanne beeinträchtigen, und deren Anzahl deshalb so gering wie möglich gehalten werden soll.

Der Erfindung liegt die Aufgabe zugrunde, eine Kanne oder Flasche der eingangs bezeichneten Art so auszugestalten, daß ihre Herstellung in einem zweiteiligen Spritzgießwerkzeug möglich ist.

Diese Aufgabe wird durch die kennzeichnenden Merkmale des Anspruchs 1 gelöst.

Die erfindungsgemäße Ausgestaltung umfaßt eine besondere Formgebung der Mantelflächenstreifen im Bereich der axialen Mantellinien und zwar dergestalt, daß letztere in diesem Bereich mit der axialen Mittelebene der Kanne, in der die axialen Mantellinienen liegen, Winkel bilden, die 90° oder geringfügig größer bemessen sind. Aufgrund dieser Ausgestaltung sind keine Hinterschneidungen vorhanden. Infolgedessen kann eine erfindungsgemäß ausgestaltete Kanne in zweiteiligen Spritzgießwerkzeugen hergestellt werden, die gegenüber dreiteiligen erheblich einfacher sind.

Außerdem ergeben sich an der Mantelfläche der Kanne im Bereich der Teilungsfugen des Spritzgießwerkzeugs nur zwei Nähte, was gegenüber drei Nähten bei der bekannten Ausgestaltung eine bedeutende Verbesserung darstellt.

Bei der Relief-Verzierung, von der die Erfindung ausgeht, handelt es sich um eine solche mit verhältnismäßig flach zurückspringenden Mantelflächstreifen. D.h. die Abschnitte der Mantelflächenstreifen, die in der Nähe der axialen Mantellinien verlaufen, jedoch einen Abstand in Umfangsrichtung von den axialen Mantellinien aufweisen, bilden an jeder Stelle ihrer Flächen mit der axialen Mittelebene, in der die axialen Mantellinien liegen, Winkel, die ebenfalls 90° oder geringfügig größer bemessen sind. D.h., daß es im Rahmen der Erfindung möglich ist, Mantelflächenstreifen einer solchen Tiefe zu benutzen, die wenn sie die axialen Mantellinien noch nicht schneiden keine Hinterschnitte bilden. Bei im Querschnitt im wesentlichen runden Kannen kann sich die Tiefe der Mantelflächenstreifen somit zur den axialen Mantellinien entferntesten Stelle der Kannenwölbung hin vergrößern.

Es ist im Rahmen der Erfindung aus Gründen der Materialersparnis von Vorteil, die Erhebungen gemäß Anspruch 2 durch dachförmig zulaufende Kanten zu bilden. Diese Formbildung führt auch zu einer guten Griffestigkeit, wodurch das Handhaben der Kanne z. B. bei deren Pflege und Reinigung erleichtert wird.

Dabei können im Rahmen der Erfindung die Mantelflächenstreifen im horizontalen Querschnitt leicht konkav gekrümmt (Anspruch 3) sein, oder sie können auch eine andere regelmäßige oder unregelmäßige Form aufweisen. Vorgenannte Ausbildungen trägt dazu bei, das Erscheinungsbild der Kanne zu verbessern.

Die Ausgestaltung nach Anspruch 4 ist deshalb vorteilhaft, weil die Ränder der Mantelflächenstreifen, die am ehesten zu einer Hinterschneidung neigen, einen größtmöglichsten Abstand von der jeweiligen axialen Mantellinie aufweisen und deshalb in geringerem Maße zu Hinterschneidungen neigen.

Die erfindungsgemäße Ausgestaltung führt im Bereich der axialen Mantellinien zu einer Veränderung der Relief-Verzierung. Dies ist dadurch bedingt, daß die Mantelflächenstreifen im Bereich der axialen Mantellinie gegenüber den übrigen Abschnitten der Mantelflächenstreifen geringfügig erhaben sind. Im ungünstigsten Falle, nämlich dann, wenn die Mantelflächenstreifen im Bereich der axialen Mantellinien mit der axialen Mittelebene, in der die axialen Mantellinien liegen, Winkel bilden, die 90° betragen, laufen die Erhebungen aus, so daß sie nicht mehr sichtbar sind. Die Ausgestaltung nach Anspruch 5 ermöglicht es, die erfindungsgemäß erhabenen Bereiche der Mantelflächenstreifen im Bereich des Griffs und im Falle einer Kanne auch unterhalb des Ausgießers auzuordnen, wo sie weniger in Erscheinung treten.

Die Ausbildung nach Anspruch 6 ermöglicht die Beibehaltung der Relief-Verzierung auch bei solchen Kannen, die sich nach oben verjüngen.

Nachfolgend wird ein bevorzugtes Ausführungsbeispiel der Erfindung anhand einer vereinfachten Zeichnung näher beschrieben. Es zeigt:

Fig. 1 eine erfindungsgemäß ausgestaltete Isolierkanne in der Seitenansicht;

Fig. 2 die Isolierkanne gemäß Fig. 1 in der Draufsicht, teilweise geschnitten.

Fig. 3 die Isolierkanne in der Seitenansicht von rechts;

Fig. 4 den Schnitt IV-IV in Fig. 1

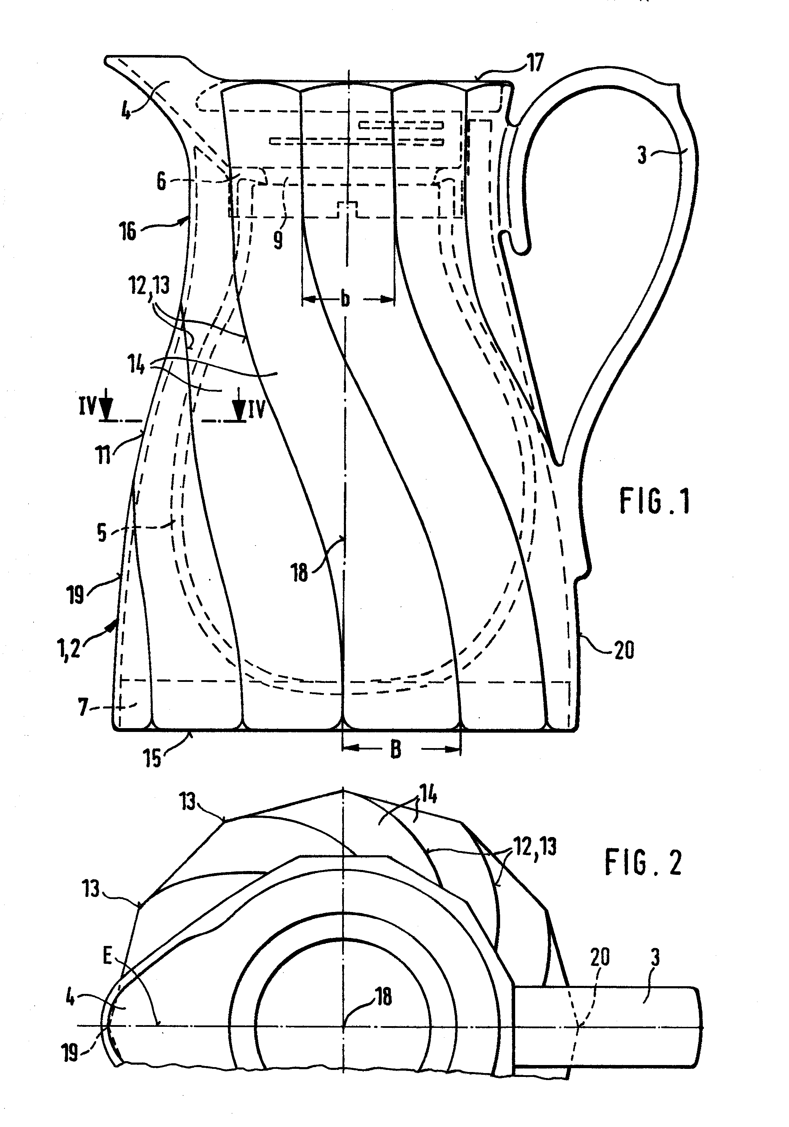

Die in Fig. 1 allgemein mit 1 bezeichnete Isolierkanne besteht aus einem allgemein mit 2 bezeichneten mantelförmigen Schutzgehäuse 2 aus Kunststoff, an dem einstückig ein Griff 3 und ein Ausgießer 4 angeformt sind, einem im Schutzgehäuse 2 aufgenommenen Isolierbehälter 5, der zwischen einer Schulter 6 im oberen Bereich des Schutzgehäuses 2 und einem einschraubbaren Bodenteil 7 des Schutzgehäuses 2 eingespannt ist, und einem nicht dargestellten Verschlußdeckel, mit dem die im Bereich der Schulter 6 angeordnete Öffnung 9 der Kanne verschließbar ist.

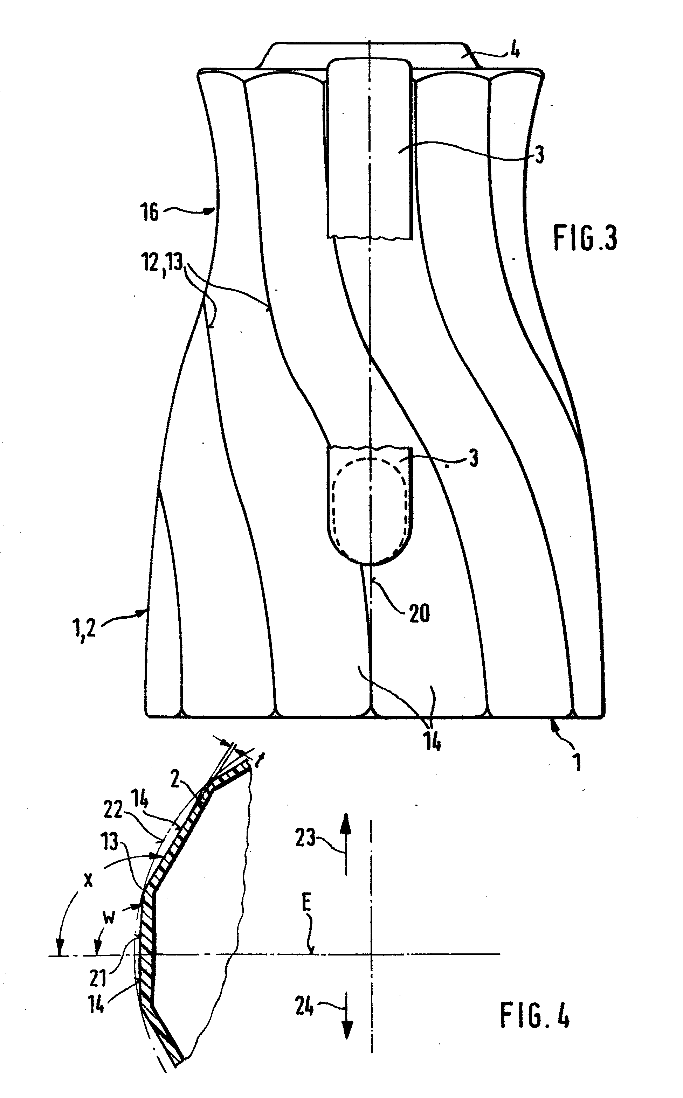

Auf der Mantelfläche 11 des Schutzgehäuses 2 befindet sich eine allgemein mit 12 bezeichnete Relief-Verzierung in Form von mit Linksdrall im wesentlichen senkrecht bzw. aufwärts verlaufenden erhabenen Kanten 13, die zurückspringende Mantelflächenstreifen 14 zwischen sich einschließen. Die Mantelflächenstreifen 14 sind im horizontalen Querschnitt leicht gekrümmt, was aus dem Teilschnitt in Fig. 4 deutlich zu entnehmen ist. Die Kanten 13 werden somit durch dachförmig zulaufende Flächenabschnitte der Mantelflächenstreifen 14 gebildet und können vorzugsweise geringfügig gerundet sein. Beim vorliegenden Ausführungsbeispiel sind dreizehn Kanten 13 vorhanden, die zwölf Mantelflächenstreifen 14 zwischen sich einschließen. Das regelmäßig dreizehneckige Schutzgehäuse 2 ist an seiner Unterkante 15 am breitesten bemessen, verjüngt sich aufwärts domförmig bis zu einer Taillie 16 und verbreitert sich oberhalb der Taillie 16 geringfügig bis zu seiner Oberkante 17. Entsprechend ist auch die Breite der Mantelflächenstreifen 14 bemessen, die bis zur Taille 16 ebenfalls konvergiert und oberhalb der Taille 14 geringfügig divergiert. Die Breite der Mantelflächenstreifen 14 ist an der Unterkante mit B und im Bereich der Taille 16 mit b bezeichnet.

Das Schutzgehäuse 2 ist ein Kunststoff-Spritzgußteil, zu dessen Herstellung ein nicht dargestelltes aus zwei Hälften bestehendes Spritzgießwerkzeug mit einer Teilungsebene vorgesehen ist, in der die Mittelachse 18 liegt, die gleichzeitig eine axiale Mittelbene des Schutzgehäuses 2 darstellt und in Fig. 2 und 4 mit E bezeichnet ist. Die nicht dargestellten Teilungsfugen des Spritzgießwerkzeugs verlaufen an der Mantelfläche 11 des Schutzgehäuses 2 entlang von axialen Mantellinien 19, 20. Die Anordnung ist so getroffen, daß die Teilungsebene E des Spritzgießwerkzeugs durch den Ausgießer 4 und den Griff 3 sowie an der Unterkante 15 des Schutzgehäuses 2 durch einander gegenüberliegende Kanten 13 verläuft.

In den Bereichen der axialen Mantellinie 19, 20 in denen die Mantelflächenstreifen 14 letztere überqueren (vgl. Teilschnitt gemäß Fig. 4) sind die mit 21 bezeichneten Abschnitte der Mantelflächenstreifen 14 gegenüber ihren übrigen Abschnitten etwas erhaben und so geformt, daß sie mit der Teilungsebene des Spritzgießwerkzeugs bzw. der axialen Mittelebene E des Schutzgehäuses 2 einen Außenwinkel w einschließen, dessen Schenkel in der betreffenden Radialebene - (Schnittlinie IV-IV in Fig. 1) liegen und einen Winkel einschließen, der größer oder gleich 90° ist, vorzugsweise geringfügig größer als 90° bemessen ist. Da auch die Tiefe t der Mantelflächenstreifen 14 bezüglich einer gedachten, durch die Kanten 13 gehenden, andeutungsweise dargestellten Einhüllenden 22 nur so groß bemessen ist, daß die Mantelflächenstreifen 14 an jedem Punkt außerhalb der vorbeschriebenen Abschnitte 21 im Bereich der axialen Mantellinie 19, 20 mit der Teilungsebene E des Spritzgießwerkzeugs einen Außenwinkel x einschließen der 90° oder vorzugsweise geringfügig größer bemessen ist und dessen Schenkel in der betreffenden Radialebene liegen, ist ein störungsfreies Entformen des Schutzgehäuses 2 durch radiales Entfernen nach außen der nicht dargestellten Hälften des Spritzgießwerkzeugs in die mit Pfeilen 23 und 24 dargestellten Richtungen möglich.

Es ist vorteilhaft, die Außenwinkel w, x geringfügig größer als 90° zu bemessen, um beim Entformen ein schnelles Ablösen des Schutzgehäuses von den Wänden des Spritzgießwerkzeugs zu erreichen.

Bei der vorbeschriebenen bevorzugten Ausgestaltungsform der Erfindung sind die Mantelflächenstreifen 14 einander gleich ausgebildet. Im Rahmen der Erfindung ist es jedoch auch möglich, unregelmäßige Formen der Mantelflächenstreifen, z.B. unregelmäßige Breiten B, b vorzusehen. Die Außenform des Schutzgehäuses 2 ist ebenfalls nicht auf die vorbeschriebene bevorzugte Form beschränkt. Es ist im Rahmen der Erfindung ebenfalls möglich, die Relief-Verzierung 12 an einer zylinderischen Außenform vorzusehen. Darüberhinaus ist es im Rahmen der Erfindung auch möglich, die erfindungsgemäße Ausgestaltung an einer Flasche, vorzugsweise am Schutzgehäuse einer Isolierflasche vorzusehen. Dabei kann es sich um eine Flasche oder Isolierflasche mit oder ohne Griff handeln.

Der Bereich der Mantelflächenstreifen 14, der erfindungsgemäß erhöht ist, ist um so größer, je größer die Steigung der Mantelflächenstreifen 14 bzw. Reliefkanten 13 ist. Es ist deshalb eine solche Steigung besonders vorteilhaft, die 1 bis 2, vorzugsweise 1,5 mal Breite B, b der Mantelflächenstreifen beträgt. Bei letzterer läuft die betreffende Reliefkante 13 an der Unterkante 15 der Kanne 1 bzw. des Schutzgehäuses 2 in die hier vorhandene axiale Mantellinie 19, 20 aus, während an der Oberkante 17 die axiale Mantellinie 19, 20 in der Mitte des hier vorhandenen Mantelflächenstreifens verläuft.

## Ansprüche

1. Kanne oder Flasche aus Kunststoff, insbesondere Kunststoffmantel einer Isolierkanne oder -flasche, die durch Spritzgießen in einem mehrteiligen Spritzgießwerkzeug mit axial verlaufenden Teilungsfugen hergestellt ist,

mit einer Relief-Verzierung auf deren Mantelfläche, die im wesentlichen vertikal und wendelförmig verlaufende Erhebungen aufweist,

die zwischen sich zurückspringende Mantelflächenstreifen begrenzen,

**dadurch gekennzeichnet,**

daß die Mantelflächenstreifen (14) im Bereich der bei einem zweiteiligen Spritzgießwerkzeug vorhandenen nur einen Teilungsfuge mit der in der Teilungsfuge verlaufenden axialen Mittelebene (E) der Isolierkanne (1) bzw. des Kunststoffmantels (2), Außenwinkel (w) bilden, die 90° oder geringfügig größer bemessen sind.

2. Kanne oder Flasche nach Anspruch 1,

**dadurch gekennzeichnet,**

daß die Erhebungen durch Verzierungskanten (13) gebildet sind, die durch dachförmig zulaufende Mantelflächenstreifen (14) gebildet sind.

3. Kanne oder Flasche nach Anspruch 1 oder 2,

**dadurch gekennzeichnet,**

daß die Mantelflächenstreifen (14) im horizontalen Querschnitt konkav geformt, insbesondere gerundet sind.

4. Kanne oder Flasche nach einem der Ansprüche 1 bis 3,

**dadurch gekennzeichnet,**

daß an der Unterkante (15) der Kanne (1) bzw. Flasche oder des Kunststoffmantels (2) im Bereich der in den Schnittlinien zwischen der Teilungsfuge und der Mantelfläche (11) liegenden axialen Mantellinien (19, 20) die hier verlaufende Verzierungskante oder -kanten (13) asymtotisch in die axialen Mantellinien (19, 20) auslaufen.

5. Kanne oder Flasche nach einem der Ansprüche 1 bis 4,

**dadurch gekennzeichnet,**

daß die axialen Mantellinien (19, 20) mit dem Griff (3) und dem Ausgießer (4) in einer axialen Mittelebene (E) liegen.

6. Kanne oder Flasche nach einem der Ansprüche 1 bis 5,

**dadurch gekennzeichnet,**

daß die Kanne oder Flasche und die Mantelflächenstreifen (14) sich aufwärts verjüngen, insbesondere sich bis zu einer Taillie (16) verjüngen und oberhalb der Taillie (16) wieder verbreitern.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-8 400 916 (ZIMMERMANN) <br> * Abbildung 1; Seite 13, Zeilen 17-21 * | 1 | A 47 J 41/02 <br> A 47 G 19/12 |
| A | | 2-6 | |
| | --- | | |
| Y | BE-A- 674 577 (WILLEMS) <br> * Abbildung 5 * | 1 | |
| | --- | | |
| A | FR-A-1 202 425 (LACROIX) <br> * Abbildung 2 * | 1-3 | |
| | --- | | |
| A | US-A-2 187 558 (KUSHIMA) | | |
| | ----- | | |

|  | RECHERCHIERTE SACHGEBIETE (Int. Cl.4) |
|---|---|
| | A 47 J <br> A 47 G |

Der vorliegende Recherchenbericht wurde für alle Patentansprüche erstellt.

| Recherchenort | Abschlußdatum der Recherche | Prüfer |
|---|---|---|
| DEN HAAG | 04-11-1986 | BEUGELING G.L.H. |